# EUROPÄISCHE PATENTSCHRIFT

(11) **EP 1 208 320 B1**
(45) Veröffentlichungstag und Bekanntmachung des Hinweises auf die Patenterteilung: **12.05.2004**
(21) Anmeldenummer: 00956434.5
(22) Anmeldetag: 11.08.2000
(51) Int. Cl.: F16K 1/30

(54) **PIN-INDEX-FLASCHENVENTIL MIT WÄLZLAGER**
PIN-INDEX BOTTLE VALVE WITH A ROLLING BEARING
VALVE DE BOUTEILLE A PIN-INDEX COMPORTANT UN ROULEMENT

(30) Priorität: 31.08.1999 DE 19941276
(43) Veröffentlichungstag der Anmeldung: 29.05.2002
(73) Patentinhaber: Messer Cutting & Welding GmbH, 64823 Gross-Umstadt (DE)
(72) Erfinder: MUELLER, Albrecht, D-65812 Bad Soden (DE); SCHULZ, Kurt, D-64319 Pfungstadt (DE)
(74) Vertreter: Staudt, Armin, Dipl.-Ing.
(86) Internationale Anmeldenummer: PCT/EP2000/007855
(87) Internationale Veröffentlichungsnummer: WO 2001/016511

(56) Entgegenhaltungen:
- DE-A- 2 550 811
- US-A- 3 841 353

## Beschreibung

Die Erfindung betrifft ein Pin-index-Flaschenventil für Gasdruckflaschen, insbesondere für die medizinische Anwendung, nach den Merkmalen des Oberbegriffs von Anspruch 1.

Derartige, den Anforderungen und Maßen der DIN EN 850 entsprechende Flaschenventile sind an sich bekannt und mit Bügelverschlüssen nach dem Pin-index-System für Gasflaschen für die medizinische Anwendung, mit einem maximalen Fülldruck von 250 bar bei 15° C ausgebildet, wobei die mit dem Handrad form- und kraftschlüssig verbundene Oberspindel in einer mittleren Öffnung der Kopfschraube gleitend gelagert ist.

Der Bügelverschluß des Pin-index-Flaschenventils wird mit einem geschlossenen Bügel an die als Druckgasquelle dienende Druckgasflasche angeschlossen und muss zur Gasentnahme über das Handrad des Pin-index-Gasflaschenventils geführt werden. Somit ist der Durchmesser des Handrades des Flaschenventils durch den Innendurchmesser des Anschlussbügels begrenzt. Das aufgrund dieser konstruktiven Gegebenheiten mit einem relativ kleinen Durchmesser ausgebildete Handrad lässt sich zur Gasentnahme aus einer vollständig gefüllten Gasflasche nur mit einem relativ großen Kraftaufwand betätigen, was bei dem überwiegend weiblichen medizinischen Bedienungspersonal zu Problemen führt.

Die Aufgabe der Erfindung besteht in der Bereitstellung eines Pin-index-Flaschenventils für Druckgasflaschen mit verringerten Handrad-Betätigungsmomenten.

Gelöst wurde die Aufgabe durch ein Pin-index-Flaschenventil gemäß der Merkmale von Anspruch 1.

Pin-index-Flaschenventile mit Wälzlager werden hauptsächlich für den medizinischen Gebrauch von Druckgasdruckflaschen für die Krankenpflege, einschließlich therapeutischer, diagnostischer und prophylaktischer Anwendung, in Krankenhäusem und für Notfälle eingesetzt.

Das mit einem den Anforderungen und Maßen der DIN EN 850 entsprechenden Bügelverschluß versehene, vorzugsweise zylindrische und im wesentlichen symmetrisch zur Längsachse aufgebaute Ventilgehäuse des Pin-index-Gasflaschenventils besteht aus einem thermisch formbaren Material wie Metall, beispielsweise Messing oder Edelstahl oder Kunststoff, mit einer üblichen Gaskanal-Ausbildung, wobei in dem als axiale Längsbohrung ausgebildeten Gaskanal eine in bekannter Weise mit einer Ventilsitzdichtung ausgebildete Unterspindel und eine mit Stützring und O-Ring versehene Oberspindel in bekannter Weise angeordnet sind. Die direkt mit dem Handrad verbundene Oberspindel ist in einer mittleren Öffnung der Kopfschraube, mittels eines, vorteilhaft als Axialrillenkugellager ausgebildeten Wälzlagers axial verschiebbar gelagert, sodass die dem Gas-Vor-druck proportionale Betätigungsmomente des Handrades reduziert werden und somit eine leichtere Betätigung des Handrades auch bei vollgefüllten Druckgasflaschen durch das überwiegend weibliche medizinische Bedienungspersonal gewährleistet ist.

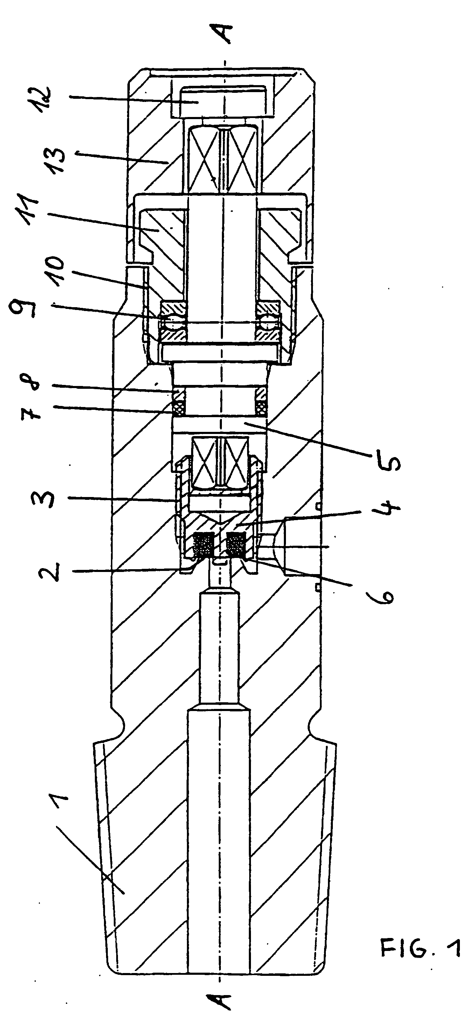

Im folgenden wird die Erfindung anhand der Zeichnung erläutert.

Die einzige Figur zeigt eine bevorzugte Ausführungsform des Pin-index-Flaschenventils in einem Längsschnitt entlang der Achse A-A. Das ohne einen Pin-index-Bügelverschluß und mit einer gebräuchlichen Gaskanal-Anordnung dargestellte Ventilgehäuse 1 des Pin-index-Flaschenventils enthält einen Ventilsitz 2, ein Gewinde 3 zur Führung einer mit einer Ventilsitzdichtung 6 versehenen Unterspindel 4 und einer mit einem O- und Stützring 7, 8 ausgebildeten Oberspindel 5. Die mit einem Handrad 13 form- und kraftschlüssig verbundene Oberspindel 5 ist mittels eines Wälzlagers 9 in einer mittleren Öffnung einer durch ein Gewinde 10 befestigten Kopfschraube 11 gelagert. Die am Fuße der Unterspindel 4 vorhandene und beispielsweise aus einem Elastomer bestehende Ventilsitzdichtung 6 drückt bei geschlossener Stellung des Ventiles auf den Ventilsitz 2. Die Kopfschraube 11 und die Unter- und Oberspindel 4, 5 sind vorzugsweise aus Messing oder Edelstahl. Das eine Vierkant-Öffnung enthaltene und mittels einer Schraube 12 am oberen Vierkant der Oberspindel 5 befestigte Handrad 13 ist vorzugsweise aus Messing verchromt.

### Bezugszeichen-Aufstellung

- 1: Ventilgehäuse
- 2: Ventilsitz
- 3: Gewinde
- 4: Unterspindel
- 5: Oberspindel
- 6: Ventilsitzdichtung
- 7: O-Ring
- 8: Stützring
- 9: Wälzlager
- 10: Gewinde
- 11: Kopfschraube
- 12: Schraube
- 13: Handrad

## Patentansprüche

1. Pin-index-Flaschenventil für Druckgasflaschen, insbesondere für die medizinische Anwendung, bei welchem eine mit einem Handrad (13) verbundene Oberspindel (5) in einer mittleren Öffnung einer Kopfschraube (11) gleitend gelagert ist,
**dadurch gekennzeichnet,**
**dass** die mit dem Handrad (13) verbundene Oberspindel (5) mittels eines Wälzlagers ( 9) in der mittleren Öffnung der Kopfschraube (11) gelagert ist.

2. Ventil nach Anspruch 1,
**dadurch gekennzeichnet,**
**dass** das Wälzlager (9) ein Rillenkugellager ist.

3. Ventil nach Anspruch 2,
**dadurch gekennzeichnet,**
**dass** das Rillenkugellager ein Axialrillenkugellager ist.

## Claims

1. A pin-index bottle valve for pressure gas bottles, especially for medical use, wherein an upper spindle (5) which is connected to a handwheel (13) is slidingly supported in a central opening of a cap screw (11),
**characterized in**
**that** the upper spindle (5) which is connected to the handwheel (13) is supported in the central opening of the cap screw (11) by means of a rolling bearing (9).

2. The valve according to claim 1,
**characterized in**
**that** said rolling bearing (9) is a deep groove ball bearing.

3. The valve according to claim 2,
**characterized in that** the deep groove ball bearing is a deep groove ball thrust bearing.

## Revendications

1. Valve de bouteille avec ergots de sécurité pour bouteilles de gaz en particulier pour une application médicale, où est logée une broche supérieure (5) reliée à une manette (13) de manière coulissante dans une ouverture moyenne d'une vis de tête (11), **caractérisée en ce que** la broche supérieure (5) reliée au volant (13) est logée dans l'ouverture moyenne de la vis de tête (11) au moyen d'un palier à roulement (9).

2. Valve selon la revendication 1, **caractérisée en ce que** le palier à roulement (9) est un roulement à billes à gorge.

3. Valve selon la revendication 2, **caractérisée en ce que** le roulement à billes à gorges est un roulement à billes à gorge axial
